Europäisches Patentamt

(19) European Patent Office

Office européen des brevets

(11) Publication number: **0 201 145**
**B1**

(12) EUROPEAN PATENT SPECIFICATION

(45) Date of publication of patent specification: 25.04.90

(21) Application number: 86200799.4

(22) Date of filing: 06.05.86

(51) Int. Cl.⁵: **B 24 C 7/00, B 05 B 12/00**

(54) **Grit blasting apparatus.**

(30) Priority: 07.05.85 NL 8501288

(43) Date of publication of application:
12.11.86 Bulletin 86/46

(45) Publication of the grant of the patent:
25.04.90 Bulletin 90/17

(84) Designated Contracting States:
BE DE GB NL

(56) References cited:
EP-A-0 061 166
FR-A- 250 321
FR-A-2 181 405
FR-A-2 513 344
GB-A-2 077 158
US-A-2 133 491
US-A-3 211 337
US-A-3 543 444
US-A-3 882 638

(73) Proprietor: Rijndelta Coating Technieken B.V.
Zinkstraat 7
NL-2984 AL Ridderkerk (NL)

(72) Inventor: de Koning, Hendrik Johannes
Bernhardstraat 15
NL-5256 GD Oudheusden (NL)
Inventor: Moritz, Hendrik Willem
Doggerstraat 8/c
NL-3028 HN Rotterdam (NL)
Inventor: Spuijbroek, Pieter Adrianus
Westeinde 36
NL-2969 BM Oud Alblas (NL)

(74) Representative: Smulders, Theodorus A.H.J., Ir.
et al
Vereenigde Octrooibureaux Nieuwe Parklaan
107
NL-2587 BP 's-Gravenhage (NL)

Courier Press, Leamington Spa, England.

**Description**

The invention relates to a grit blasting apparatus comprising a compressor for supplying compressed air which via a hose with a hand-operated main supply valve is supplied to a grit supply tank for pressure generation within said tank, which is equipped with a vent valve, and to a mixing chamber in which grit from the tank is mixed with compressed air, the grit/air mixture formed being supplied via a grit blasting hose with a mixture supply-interruption valve to a grit blasting nozzle to be operated by an operator at the work point relatively remote from the tank, with air fit for breathing being supplied via a separate air hose with a reduction valve to a grit blasting helmet to be worn by the operator, and in which further a valve operated by a so-called dead man's handle is provided at the grit blasting nozzle with which valve the feed to the grit blasting nozzle is interrupted by releasing the handle.

Grit blasting is used on a large scale as an effective method for cleaning steel or concrete. With known grit blasting apparatus, accidents regularly occur as a result of the inherent possibility of putting the plant into operation without the operator's knowledge, while the dead man's handle has been fixed. When the apparatus is put into operation, the end of the grit blasting conduit with the nozzle sweeps around, whereby damage may be done to the object being treated or bystanders may become injured. Another source of accidents is the fact that, in known plants, these are not immediately de-aerated after being stopped. When the supply of compressed air to the grit blasting tank is discontinued, the flow of mixture at the grit blasting nozzle continues for another 7—11 seconds.

It is an object of the invention to avoid these disadvantages and to provide a grit blasting apparatus that is safer, and in particular has a more reliable operation and safety.

For this purpose, in the grit blasting apparatus according to the invention, all valves in the operating circuit and in the feed to the grit blasting nozzle are operable only by compressed air and against spring bias, and the mixture supply-interruption valve is controlled by compressed air supplied to it via a control valve operated by a control circuit including the valve operable by the dead man's handle and a starter valve in the vicinity of the operator, the arrangement being such that mixture is supplied to the grit blasting nozzle only if first the dead man's handle is operated and maintained in the position in which it keeps the associated valve in its open position and thereafter the starter valve is operated.

When stopping (also in the case of an emergency stop) by releasing the dead man's handle, the grit/air mixture stream from the blast nozzle is stopped virtually immediately. The recoil of the end of the supply conduit with the nozzle does not occur because the mixture stream is shut off immediately after the nozzle. Starting or stopping without the operator's knowledge is excluded, because the latter has himself to perform two operations therefor, namely, first operate the dead man's handle and next the starter valve. Even if, for example, the dead man's handle is tied up or wedged, it is always necessary first to operate the starter valve via a starting button before opening the mixture supply-interruption valve.

In a further preferred elaboration of the invention, the control circuit may include between the starter valve and the valve operated by the dead man's handle a switch valve having two air-passing positions and also connected to the air passage between the control valve and the mixture supply-interruption valve, and in which, while the dead man's valve is open and when the starter valve is briefly opened compressed air is supplied via the switch valve, which thereby is moved into one of its air-passing positions, and via the dead man's valve to the control valve to open the same and permit air to flow to the mixture supply-interruption valve, from which air supply an air stream is branched off to the switch valve which as a result is moved into the other air passing position and, via the dead man's valve, passes an air stream to the control valve to keep it, and thus the mixture supply-interruption valve as well, in open position.

Accordingly, the control circuit of the control valve is, for a short period of time, supplied via the starter valve to open the control valve and when air flows through the latter, a portion of this air is branched off to keep the control circuit pressurized and thereby to maintain the control valve proper in open position. This situation continues so long as the dead man's handle is kept impressed. As soon as it is released the control pressure drops out and the control valve is closed with the result that the mixture supply-interruption valve is immediately closed as well. Re-impressing the dead man's handle has no effect whatsoever, because pressure can only be permitted in the control circuit via the connection between control valve and mixture supply-interruption valve or via the starter valve. Accordingly, after an interruption the starter valve must always be re-operated first.

Furthermore, from the air supply from the control valve to the mixture supply-interruption valve there may also be a branch-off to a reversing valve at the grit supply tank via which branch-off, when the control valve is in its open position, compressed air can be supplied to the reversing valve for closing the tank vent and opening a valve included in the compressed-air supply to the grit tank.

In this way when the control current is interrupted, and hence the air supply via the control valve to the mixture supply-interruption valve is interrupted, the air supply to the reversing valve is automatically interrupted immediately, as a result of which it moves under spring pressure to a position in which the tank vent is opened and the valve in the compressed air supply to the grit tank is closed. Accordingly, except for the path between the compressor and the grit tank, the entire system is de-aerated. To re-pressurize the system, it will first be necessary to re-impress the dead man's handle and to operate the starting button of the starter valve. When one of the connecting hoses is pinched off, too, either the control circuit drops out or the supply of pressure to the reversing valve, so that the system is de-aerated directly or indirectly.

All valves can only be re-opened after the failure has been eliminated.

In the apparatus according to the invention, use is made of compressed air, which is always available for grit blasting, and which is safer than electrical control which, for example, when painting enclosed spaces may involve the risk of explosion. Ergonomically, too, the use of compressed air only is favourable.

In order that, when the main supply pressure should suddenly drop, the necessary operating pressure is ensured, it is possible, according to the invention, to have the air supply to the control valve, to the starter valve, to the grit blasting helmet, and to the reversing valve effected from a compressed-air buffer-vessel.

There is also provided a ball valve which is suitable for many purposes, but is particularly suitable for use as a mixture supply-interruption valve in the apparatus according to the invention. The ball valve comprises in known manner a valve member adapted to be positioned in a transport channel and to be pressed onto a seat by the stream of material in said channel, said valve member being connected via a valve stem to a piston in a housing provided laterally of the transport channel, said piston being mounted for reciprocating movement substantially normal to the passage in said housing and further provided with a control air connection, and in which according to the invention, the control air connection is situated at the side of the piston proximal to said valve member, the other side of the piston being biased by a spring urging the valve member towards the transport conduit.

Such a valve fits within the framework of the invention, which only employs valves operated by compressed air and against spring bias. As soon as the control current for the piston drops out, the spring presses the valve member into the transport channel, so that it is pressed onto a seat by the flow pressure of the grit/air mixture and shuts off the passage. This mixture supply interruption valve can only be opened after the transport channel has been de-aerated, so that the valve member is released from the seat and after the control pressure has again been applied to move the piston and withdraw the valve member from the transport channel.

GB—A—2,077,158 discloses a grit blasting apparatus comprising a compressor for supplying blasting air through a grit blasting hose comprising a pilot operated air stop valve, wherein the stop valve is controlled by an operator at the work point exclusively by means of an operating air circuit including a dead man's handle. There is no additional control circuit, as in the apparatus according to the invention, which additional control circuit having a starter valve in the vicinity of the operator and cooperates with the dead man's handle in the manner disclosed and therefore the known apparatus has the disadvantages of the possibility of the plant being put into operation without the operator being aware of this and further upon releasing the dead man's handle there is no immediate deaeration of the hose extending between the production section and the working site.

In illustration of the invention, one embodiment of the grit blasting apparatus will be described with reference to the drawings.

Fig. 1 shows a block diagram of the grit blasting apparatus; and

Fig. 2 shows an embodiment of a ball valve particularly suitable for use as a mixture supply-interruption valve.

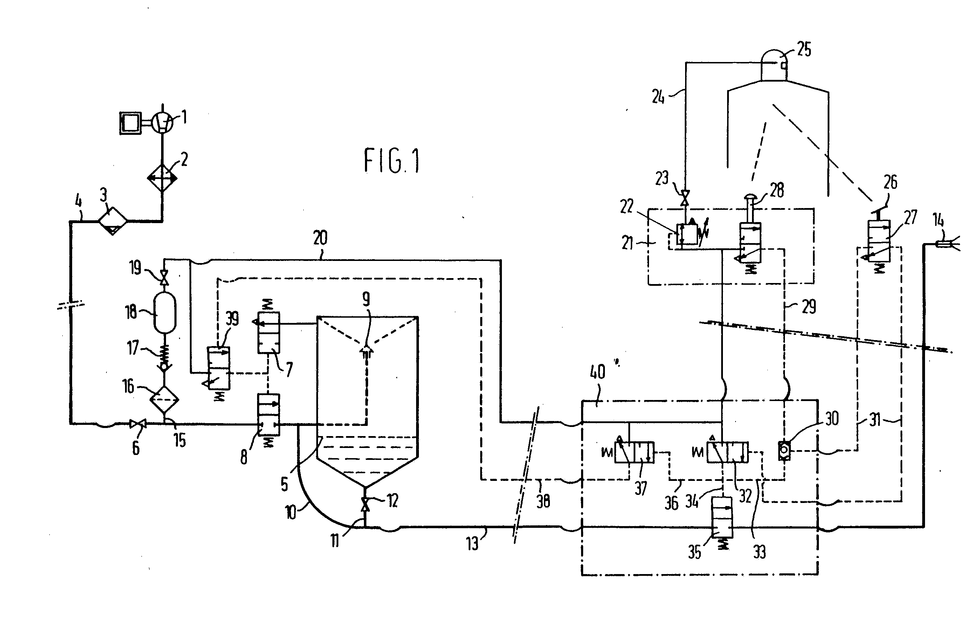

According to the drawings, in particular Fig. 1, the grit blasting apparatus comprises an energy section comprising an air compressor 1 having, per grit blasting nozzle, a capacity of, e.g., 7—10 $m^3$ per minute at a pressure of 7—10 bar, and generally driven by a diesel motor. The compressed air delivered flows via an after-cooler 2 and an oil-and-water separator 3, and possibly an air buffer tank, through a compressed-air supply hose 4, which may have a diameter of approximately 3.5—5 cm and a length of 25—50 m, to a production section.

The production section comprises a grit blasting tank 5, which may have a capacity of approximately 200 l. The air supply hose 4 to the tank includes a main supply valve 6, which is operable by hand.

After the main supply valve 6 has been opened, compressed air is initially exclusively supplied, as will be described more fully hereinafter, to a control box 21 which is carried by an operator at the working point and may be at about 100 m. The supply of air takes place via a control case 40 which may be about six meters behind the working point, and which will be described more fully hereinafter.

When the operator is ready he gives a pneumatic signal via a starting button on the control box, which causes compressed air to be passed to a reversing valve 39 at the grit supply tank. Via this reversing valve compressed air closes a (spring-opened) de-aeration valve 7 on the grit blasting tank, and at the same time opens a (spring-closed) air supply valve 8 on the grit blasting tank, and compressed air flows through a pipe member in the grit blasting tank to the grit blasting medium pressure valve 9 (biased to its open position by gravity) disposed at the end thereof.

As a result this pressure valve 9 is closed and the grit blasting tank is pressurized. At the same time compressed air flows through the grit blasting air conduit 10, secured to tank 5, to a mixing

chamber 11 disposed underneath the tank. As a result of a certain underpressure in this mixing chamber relative to the air pressure in the tank, but especially by gravity, the grit (e.g. sand) sinks through a hand-adjustable metering valve 12 into the mixing chamber, and a mixture of grit and air is transported through a mixture supply hose 13, which may be 100 m long and have a diameter of about 4 cm, to the grit blasting nozzle 14. This is preferably a venturi tube in a holder at the end of the mixture supply hose. By virtue of this the grit particles are accelerated and blasted onto the surface being treated with great force, for example, to remove rust, mill scale and/or old coats of paint from a metal surface.

One part of the production section is a system comprising a operating air conduit 15, a control air-breathing filter 16, a one-way valve 17, and a buffer vessel 18 equipped with a manometer. When the main supply valve 6 has been opened the buffer vessel is automatically pressurized. Downstream of the buffer vessel in the operating air conduit is a hand-operable operating air valve 19. Through the operating air conduit 20, which is also about 100 m long, and in fact has to extend between the production section and the working point, compressed air is transported through control case 40 to the pneumatic control box 21 at the operator. After an air control valve 23 on the control box has been opened, air suitable for breathing is supplied through a reducing valve 22 provided in this box, and through a helmet hose 24, which may be approximately 1.5 m long, to the grit blasting helmet 25. This helmet and special clothing are worn by the grit blaster to protect him from grit flying about. When the operator has put on the helmet, fastened the belt with the control box, and taken the grit blasting nozzle in his hand, he is ready to work.

To start the installation, the operator subsequently grips a so-called dead man's handle mounted on the nozzle 14. As a result, the passage in a (spring-closed), so-called dead man's valve 27, attached thereto, is opened. Subsequently he briefly presses the (spring pressure opened) starting button on the control box of a starting valve 28, which starting button after being released resumes its rest position. This is a so-called reset provision.

As a consequence a pulse of compressed air is admitted through an air hose 29, which may be about 6 m long, to a switch valve 30 in control case 40. The air pulse moves a ball in the switch valve as a result of which it is switched into one of its two air-passing positions, and through the channel which is now opened, and through an operating hose 31, which also may be 6 m long, operating air is circulated in control case 40 through the dead man's valve 27, opened by the dead man's handle 26, to a (spring-closed) control valve 32 also provided in control case 40. As a result valve 32 is operated by the operating pressure, and the passage extending through the control valve is opened, through which operating air is admitted through a cross branching, to, successively and respectively, an air channel 33 to the switch valve 30, as a result of which the ball is moved to a position in which the second passage in the switch valve is opened, through which operating air can continue to flow through the operating hose 31 so long as the dead man's handle 27 is depressed. As a consequence the control valve 32 remains in its open position.

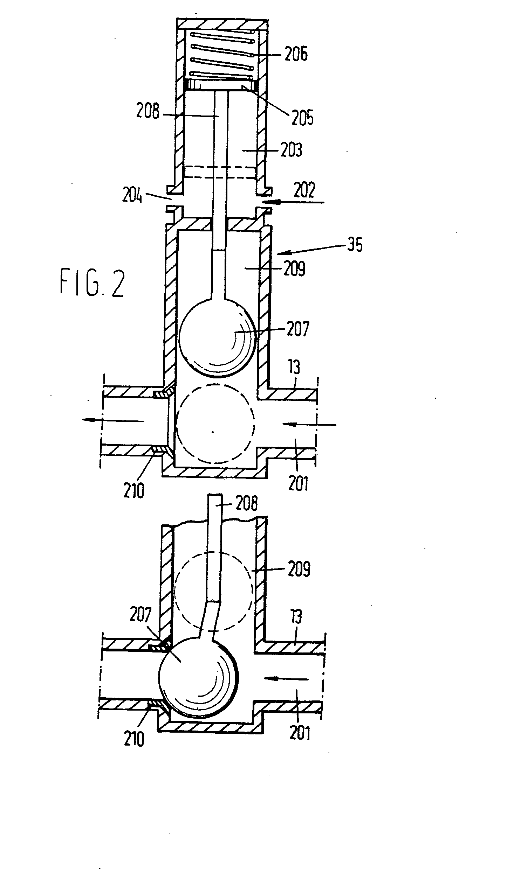

At the same time air flows through the air operating channel 34 to the (spring-closed) mixture supply-interruption valve 35, which also is at about 6 m from the grit blasting nozzle 14. A preferred embodiment of this valve is shown in Fig. 2.

Furthermore, operating air is supplied to an air passage 36 which extends to a (spring-closed) air valve 37 through which operating air is admitted through an operating hose 38, about 100 m long, to the above reversing valve 39 at the grit supply tank 5. As a result the de-aeration valve 7 on the tank is closed and the air supply valve 8 opened, and production can start as described hereinbefore.

The control case 40 is mounted in the path of the mixture supply hose 13 at about 6 m behind the jet nozzle 14.

To stop the installation, the operator only needs to release the dead man's handle 26 at nozzle 14. The handle is pushed upwards by a spring, and valve 27 is moved into a de-aeration position. All valves 32, 35, 37, 39, 7 and 8 now occupy the positions determined by spring pressure. As a consequence the mixture supply-interruption valve 35 is closed, so that the flow of mixture to nozzle 14 is stopped virtually immediately. The air supply valve 8 to the grit supply tank 5 is closed so that the supply of air is stopped and de-aeration valve 7 is opened so that the grit supply tank 5 and supply hose 13 are de-aerated, so that pressure valve 9 can sink by gravity, and tank 5 can be refilled with grit.

Referring to Fig. 2, the mixture supply-interruption valve 35 is accommodated in the mixture supply conduit 13.

The upper part of the Figure shows the position in which a stream of mixture under pressure P can flow without obstructions to mixture conduit 13 from A to B. Through a control medium connection 202, at the same time control air (or oil) under pressure R is introduced into a cylinder 203, while channel 204 is closed. As a result a piston 205 is kept in its raised position against the pressure of a spring 206.

A ball valve 207 secured to a valve stem 208 is now moved into a chamber 209 outside the operating current A—B.

When a signal is given, for example, via the dead man's handle, the air supply to channel 202 is interrupted and at the same time opening 204 is opened, the pressure in cylinder 203 drops out and spring 206 pushes piston 205 downwards. Through valve stem 208 the ball valve 207, which is secured to the valve stem in a flexible manner, is introduced into current A—B and pushed by the current onto a seat 210. The throughflow is stopped hermetically and immediately.

To re-open the throughflow in conduit 13, first the pressure in conduit 13 is removed, whereafter opening 204 is closed and via connection 202 compressed air is re-introduced into space 203. As a result valve 205 is raised against spring pressure 206. Ball 207 is then again drawn through valve steam 28 back into chamber 209, and the mixture supply conduit 13 is again open.

**Claims**

1. Grit blasting apparatus comprising a compressor (1) for supplying compressed air which via a hose (4) with a hand-operated main supply valve (6) is supplied to a grit supply tank (5) for pressure generation within said tank (5), which is equipped with a vent valve (7), and to a mixing chamber (11) in which grit from the tank (5) is mixed with compressed air, the grit/air mixture formed being supplied via a grit blasting hose (13) with a mixture supply-interruption valve (35) to a grit blasting nozzle (14) to be operated by an operator at the work point relatively remote from the tank (5), with air fit for breathing being supplied via a separate air hose (20) with a reduction valve (22) to a grit blasting helmet (25) to be worn by the operator, and in which further a valve (27) operated by a so-called dead man's handle (26) is provided at the grit blasting nozzle (14), with which valve the feed to the grit blasting nozzle (14) is interrupted by releasing the handle (26), characterized in that all valves in the operating circuit and in the feed to the grit blasting nozzle (14) are operable only by compressed air and against spring bias, and the mixture supply-interruption valve (35) is controlled by compressed air supplied to it via a control valve (32) operated by a control circuit including the valve (27) operable by the dead man's handle (26) and a starter valve (28) in the vicinity of the operator, the arrangement being such that mixture is supplied to the grit blasting nozzle only if first the dead man's handle is operated and maintained in the position in which it keeps the associated valve (27) in its open position and thereafter the starter valve is operated.

2. Apparatus as claimed in claim 1, characterized in that the control circuit includes between the starter valve (28) and the valve (27) operated by the dead man's handle a switch valve (30) having two air-passing positions and also connected to the air passage (34) between the control valve (32) and the mixture supply-interruption valve (35), and in which, while the dead man's valve (27) is open and when the starter valve (28) is briefly opened compressed air is supplied via the switch valve (30), which thereby is moved into one of its air-passing positions, and via the dead man's valve (27) to the control valve (32) to open the same and permit air to flow to the mixture supply-interruption valve (35), from which air supply an air stream is branched off to the switch valve (30) which as a result is moved into the other air passing position and, via the dead man's valve, passes an air stream to the control valve (32) to keep it, and thus the mixture supply interruption valve (35) as well, in open position.

3. Apparatus as claimed in claim 1 or 2, characterized in that, from the air supply from the control valve (32) to the mixture supply-interruption valve (35) there is also a branch-off to a reversing valve (39) at the grit supply tank (5) via which branch-off, when the control valve (32) is in its open position, compressed air can be supplied to the reversing valve (39) for closing the tank vent (7) and opening a valve (8) included in the compressed-air supply to the grit tank (5).

4. Apparatus as claimed in any of the preceding claims, characterized in that the air supply to the control valve (32), to the starter valve (28), to the grit blasting helmet (25), and to the reversing valve (39) is effected from a compressed-air buffer-vessel (18).

5. Apparatus as claimed in any one of the preceding claims, characterized by the mixture supply-interruption valve being a ball valve (35) comprising a valve member (207) adapted to be positioned in a transport channel (201) and to be pressed onto a seat (210) by the stream of material in said channel, said valve member (207) being connected via a valve stem (208) to a piston (205) in a housing provided laterally of the transport channel (201), said piston (205) being mounted for reciprocating movement substantially normal to the passage (201) in said housing and further provided with a control air connection (202), wherein said control air connection (202) is situated at the side of the piston (205) proximal to said valve member (207), the other side of the piston (205) being biased by a spring (206) urging the valve member (205) towards the transport conduit (201).

**Patentansprüche**

1. Sandstrahlgerät mit einem Kompressor (1) für das Zuführen komprimierter Luft, welche über einen Schlauch (4) mit einem handbedienten Hauptzufuhrventil (6) einem Sandvorratsbehälter (5) für die Druckerzeugung innerhalb des Behälters (5), welcher mit einem Entlüftungsventil (7) ausgerüstet ist, und einer Mischkammer (11) zugeführt wird, in welcher Sand aus dem Behälter (5) mit Druckluft gemischt wird, das gebildete Sand/Luft-Gemisch wird über einen Sandstrahlschlauch (13) mit Gemischzufuhr Unterbrechungsventil (35) einer durch einen Arbeiter an der Arbeitsstelle dem Behälter (5) relativ fernliegend zu bedienenden Sandstrahldüse (14) zugeführt, mit über einen getrennten Luftschlauch (20) mit einem Druckminderungsventil (22) zu einem von dem Arbeiter zu tragenden Sandstrahlhelm (25) zugeführter, zum Atmen geeigneter Luft, und in welchem weiterhin ein durch einen sogenannten Totmannhandgriff (26) betätigtes Ventil (27) an der Sandstrahldüse (14) vorgesehen ist, mit welchem Ventil die Zufuhr zu der Sandstrahldüse (14) durch Freigeben des Handgriffs (26) unterbrochen wird, dadurch gekennzeichnet, daß alle Ventile in der Arbeitsschaltung und in der Zufüh-

rung zu der Sandstrahldüse (14) nur durch Druckluft und gegen Federvorspannung betätigbar sind, und das Gemischzufuhr-Unterbrechungsventil (35) wird durch Druckluft gesteuert, die ihm über ein Steuerventil (32) zugeführt wird, betätigt durch eine das durch den Totmannhandgriff (26) betätigbare Ventil (27) und ein in der Nähe des Arbeiters befindliches Startventil (28) einschließende Steuerschaltung, die Anordnung ist derart, daß das Gemisch der Sandstrahldüse nur zugeführt wird, wenn zunächst der Totmannhandgriff betätigt und in der Stellung gehalten wird, in welcher er das zugeordnete Ventil (27) in seiner Offenstellung hält, und wonach das Startventil betätigt wird.

2. Gerät nach Anspruch 1, dadurch gekennzeichnet, daß die Steuerschaltung zwischen dem Startventil (28) und dem durch den Totmannhandgriff betätigten Ventil (27) ein Umschaltventil (30) mit zwei Luftdurchgangsstellungen einschließt, und das auch angeschlossen ist an den Luftdurchgang (34) zwischen dem Steuerventil (32) und dem Gemischzufuhr-Unterbrechungsventil (35), und in welches, während das Totmannventil (27) offen ist und wenn das Startventil (28) kurz geöffnet wird, Druckluft über das Umschaltventil (30) zugeführt wird, welches dadurch in eine seiner Luftdurchgangsstellungen bewegt wird, und über das Totmannventil (27) zu dem Steuerventil (32), um dasselbe zu öffnen und der Luft zu ermöglichen, zu dem Gemischzufuhr-Unterbrechungsventil (35) zu strömen, von welcher Luftzufuhr ein Luftstrom zu dem Umschaltventil (30) abgezweigt wird, welches im Ergebnis in die andere Luftdurchgangsstellung bewegt wird und, über das Totmannventil, einen Luftstrom zu dem Steuerventil (32) durchläßt, um es und damit das Gemischzufuhr-Unterbrechungsventil (35) ebenso in Offenstellung zu halten.

3. Gerät nach Anspruch 1 oder 2, dadurch gekennzeichnet, daß von der Luftzufuhr von dem Steuerventil (32) zu dem Gemischzufuhr-Unterbrechungsventil (35) auch eine Abzweigung zu einem Umsteuerventil (39) am Sandvorratsbehälter (5) stattfindet, über welche Abzweigung, wenn sich das Steuerventil (32) in seiner Offenstellung befindet, Druckluft zu dem Umsteuerventil (39) zugeführt werden kann, für das Schließen der Behälterentlüftung (7) und das Öffnen eines in der Druckluftzuleitung zu dem Sandbehälter (5) befindlichen Ventils (8).

4. Gerät nach einem der voraufgehenden Ansprüche, dadurch gekennzeichnet, daß die Luftzufuhr zu dem Steuerventil (32), zu dem Startventil (28), zu dem Sandstrahlhelm (25) und zu dem Umsteuerventil (39) aus einem Druckluftpuffergefäß (18) vorgenommen wird.

5. Gerät nach einem der voraufgehenden Ansprüche, gekennzeichnet durch Ausbildung des Gemischzufuhr-Unterbrechungsventils als Kugelventil (35) mit einem Ventilglied (207), angepaßt um in einem Transportkanal (201) angeordnet und durch den Materialstrom in dem Kanal auf einen Sitz (210) gepreßt zu werden, das Ventilglied (207) ist über eine Ventilstange (208) an einen Kolben (205) in einem seitlich von dem Transportkanal (201) vorgesehenen Gehäuse angeschlossen, der Kolben (205) ist für hin und hergehende Bewegung im wesentlichen senkrecht zu dem Kanal (201) in dem Gehäuse angebracht und ferner mit einem Steuerluftanschluß (202) versehen, wobei der Steuerluftanschluß (202) auf der dem Ventilglied (207) benachbarten Seite des Kolbens (205) gelegen ist, die andere Seite des Kolbens (205) ist durch eine Feder (206) vorgespannt, die das Ventilglied (205) gegen den Transportkanal (201) hin beaufschlagt.

**Revendications**

1. Un dispositif de sablage comportant un compresseur (1) pour fournir de l'air comprimé qui est fourni par l'intermédiaire d'un tuyau (4) ayant une vanne d'alimentation principale actionnée à la main (6) à un réservoir d'alimentation de sable (5) pour la production de pression dans ledit réservoir (5) comportant une vanne de respiration (7), et à une chambre de mélange (11) dans laquelle du sable du réservoir (5) est mélangé avec de l'air comprimé, le mélange de sable/air formé étant fourni par l'intermédiaire d'un tuyau de sablage (13) avec une vanne d'alimentation-d'interruption de mélange (35) à une tuyère de sablage (14) actionnée par un opérateur à la place de travail relativement éloignée du réservoir (5), avec de l'air apte à être respiré étant fourni par un tuyau d'air séparé (20) avec une vanne de réduction (22) à un casque de sablage (25) à utiliser par l'opérateur, et où l'on a prévu également une vanne (27) actionnée par une poignée dite d'homme-mort (26) à la tuyère de sablage (14), à l'aide de laquelle vanne l'alimentation à la tuyère de sablage (14) est interrompue par le déclenchement de la poignée (26), caractérisé en ce que toutes les vannes dans le circuit d'opération et dans l'alimentation à la tuyère de sablage (14) peuvent être actionnées seulement par de l'air comprimé et à l'encontre de l'action d'un ressort, et la vanne d'alimentation-d'interruption de mélange (35) est contrôlée par de l'air comprimé fourni via une vanne de commande (32) actionnée par un circuit de commande incorporant la vanne (27) pouvant être actionnée par la poignée d'homme-mort (26) et une vanne de démarrage (28) à proximité de l'opérateur, de telle sorte que du mélange est fourni à la tuyère de sablage seulement si d'abord la poignée d'homme-mort est actionnée et maintenue dans la position où elle maintient la vanne associée (27) dans sa position ouverte et ensuite la vanne de démarrage est actionnée.

2. Un dispositif selon la revendication 1, caractérisé en ce que le circuit de contrôle comporte entre la vanne de démarrage (28) et la vanne (27) actionnée par la poignée d'homme-mort une vanne à deux voies (30) ayant deux positions de passage d'air et également connectée au passage d'air (34) entre la vanne de contrôle (32) et la vanne d'alimentation d'interruption de mélange (35), et dans lequel, alors que la vanne d'homme-mort (27), est ouverte et la vanne de démarrage (28) est ouverte brièvement, de l'air comprimé est fourni via la vanne à deux voies (30), qui est mue par là dans l'une de ses positions de passage d'air, et via la vanne d'homme-mort (27) vers la vanne de contrôle (32) pour l'ouvrir, en permettant à l'air de s'écouler vers la vanne d'alimentation-d'interruption de mélange (35), à partir de quelle adduction d'air un courant d'air se ramifie vers la vanne à deux voies (30) qui, par là, est mue dans l'autre position de passage d'air et, via la vanne d'homme-mort, conduit un courant d'air à la vanne de contrôle (32) pour la maintenir dans une position ouverte, et par là également la vanne d'alimentation-d'interruption de mélange (35).

3. Un dispositif selon la revendication 1 ou 2, caractérisé en ce qu'à partir de l'adduction d'air de la vanne de contrôle (32) vers la vanne d'alimentation-d'interruption de mélange (35), il y a également un branchement vers une vanne de renversement (39) au réservoir d'alimentation de sable (5) par lequel branchement, lorsque la vanne de contrôle (32) se trouve dans sa position ouverte, de l'air comprimé peut être fourni à la vanne de renversement (39) pour fermer l'évent du réservoir (7) et pour ouvrir une vanne (8) incorporée dans l'alimentation d'air comprimé au réservoir de sable (5).

4. Un dispositif selon l'une des quelconques revendications précédentes, caractérisé en ce que l'alimentation d'air à la vanne de contrôle (32), à la vanne de démarrage (28), au casque de sablage (25) et à la vanne de renversement (39) est effectuée par un récipient amortisseur d'air comprimé (18).

5. Un dispositif selon l'une des quelconques revendications précédentes, caractérisé en ce que la vanne d'alimentation d'interruption de mélange est une vanne à boulet (35) comportant un organe de vanne (207) apte à être placé dans une canalisation de transport (201) et à être pressé sur un siège (210) par le filet de matériau dans ladite canalisation, ledit organe de vanne (207) étant connecté via une tige de vanne (208) à un piston (205) dans un boîtier prévu latéralement à la canalisation de transport (201), ledit piston (205) étant monté pour mouvement alternatif substantiellement perpendiculaire au passage (201) dans ledit boîtier et en plus muni d'un raccord d'air de contrôle (202), ledit raccord d'air de contrôle (202) étant situé du côté du piston (205) proche dudit organe de vanne (207), l'autre côté du piston (205) étant influencé par un ressort (206) avançant l'organe de vanne (205) vers la canalisation de transport (201).

FIG.1

FIG.2

206

205

208

203

204

202

35

209

207

13

210

201

208

209

207

13

210

201

2